# EUROPÄISCHE PATENTSCHRIFT

(11) **EP 1 428 171 B1**
(45) Veröffentlichungstag und Bekanntmachung des Hinweises auf die Patenterteilung: **09.11.2011**
(21) Anmeldenummer: 02772045.7
(22) Anmeldetag: 06.09.2002
(51) Int. Cl.: G06F 3/041, G06F 3/033

(54) **BEDIENVORRICHTUNG**
OPERATING DEVICE
DISPOSITIF D'UTILISATION

(30) Priorität: 07.09.2001 DE 20114869 U
(43) Veröffentlichungstag der Anmeldung: 16.06.2004
(73) Patentinhaber: Me-In GmbH, 76131 Karlsruhe (DE)
(72) Erfinder: RICHTER, Andres, 75181 Pforzheim (DE); GROHMANN, Stefan, 74626 Bretzfeld (DE); LUMMERZHEIM, Jörg, 64686 Lautertal (DE)
(74) Vertreter: Dimmerling & Huwer
(86) Internationale Anmeldenummer: PCT/DE2002/003287
(87) Internationale Veröffentlichungsnummer: WO 2003/023701

(56) Entgegenhaltungen:
- WO-A-01/54276
- WO-A-95/26011
- DE-A- 4 004 530
- PATENT ABSTRACTS OF JAPAN vol. 1997, no. 09, 30. September 1997 (1997-09-30) & JP 09 114430 A (HITACHI LTD), 2. Mai 1997 (1997-05-02)
- PATENT ABSTRACTS OF JAPAN vol. 1999, no. 09, 30. Juli 1999 (1999-07-30) & JP 11 109936 A (FUJI ELECTRIC CO LTD), 23. April 1999 (1999-04-23)

## Beschreibung

Die Erfindung betrifft eine Vorrichtung zur Bedienung eines Rechners oder eines rechnergestützten Gerätes, mit einer ersten Anordnung, mittels welcher die Position eines Objekts auf einer Achse bestimmbar ist.

Eine derartige Vorrichtung läßt sich beispielsweise aus einer aus der EP 0 706 648 B1 bekannten Anordnung aufbauen. Die bekannte Anordnung soll vorzugsweise zur Detektion von Wassertropfen auf einer Glasscheibe eingesetzt werden, da in Abhängigkeit der detektierten Tropfen ein Scheibenwischer eingeschaltet werden kann.

Bei der bekannten Anordnung werden zwei Meßstrecken zwischen zwei Strahlungsquellen und einem Strahlungsempfänger aufgebaut. Die von den Strahlenquellen ausgesandte Strahlung wird an auf der Oberfläche der Glasscheibe vorhandenen Wassertropfen reflektiert und von dem Strahlungsempfänger aufgenommen. Die beiden Meßstrecken werden über einen Taktgenerator zeitabschnittsweise und wechselweise betrieben.

Die vom Strahlungsempfänger ermittelten Detektionssignale werden gefiltert und in einem vom Taktgenerator angesteuerten Synchronmodulator wieder in die den einzelnen Meßstrecken zugeordneten Detektionssignale zerlegt. In einem Komparator wird daraus ein Nutzsignal ermittelt, der als Maß für die erfolgte Benetzung herangezogen werden kann. Werden die von den beiden Strahlungsquellen ausgesendeten Strahlungen gleich stark reflektiert, so ergibt sich ein Nutzsignal von null.

Das Nutzsignal wird einer Signalzentrierstufe zugeführt. Je nach dem, ob an deren Ausgang eine Regelspannung anliegt oder nicht, wird mit dieser Regelspannung dann die in die Meßstrecken eingestrahlte Strahlungsmenge geregelt, so daß sich in Abhängigkeit einer Zeitkonstante eine Rückregelung des Detektionssignals ergibt. Hierdurch ist es möglich, dynamische Änderungen im sensoraktiven Bereich der Meßanordnung zu erfassen, wobei gleichzeitig eine zuverlässige Fremdlichtkompensation stattfinden soll.

Mittels einer geeigneten Einrichtung läßt sich die von dem Strahlungsempfänger empfangene von einem auf der Scheibe angeordneten Gegenstand reflektierte Strahlung auch zur Positionsbestimmung des Gegenstandes auf der Scheibe auswerten. Hierdurch ist es möglich, die bekannte Einrichtung beispielsweise ähnlich der Funktion eines sogenannten Touchpads zur Steuerung des Cursors eines Rechners zu verwenden.

Andere Funktionen als die Bestimmung der Position beispielsweise in einer XY-Ebene lassen sich mit der bekannten Einrichtung oder dem Touchpad nicht ausführen. Will man an einer bestimmten Position in der XY-Ebene eine weitere Funktion ausführen, wie beispielsweise eine Zoom-Funktion, muß ein separates Bedienelement betätigt werden. Dies ist sehr ungünstig, da es häufig vorkommt, daß bei der Betätigung des separaten Bedienelements die gewünschte Position in der XY-Ebene veriassen wird. Des weiteren wird die Betätigung des separaten Betätigungsetements auch als störend empfunden.

Aus der DE 40 04 530 A1 ist eine Anordnung zur optischen Abstandsmessung mit Licht- oder Infrarot-Sender und -Empfänger bekannt. Bei der bekannten Anordnung bewirken die Strahlen eines Senders und eines Empfängers durch gekreuzte Anordnung eine Hintergrundausblendung. Durch Einbau eines weiteren Senders oder Empfängers wird ein dritter Strahl geschaffen, der zusammen mit einem bestehenden Strahl ein Paar bildet, dessen Hälften in einem gegeneinander leicht versetzten Winkel in einen Messraum gerichtet sind, oder aus gegeneinander versetzten Orten in den Messraum gerichtet sind. Hierdurch soll die Güte der Hintergrundausblendung verbessert werden.

Des Weiteren ist aus PATENT ABSTRACTS OF JAPAN vol. 1997, no. 09, 30. September 1997 (1997-09-30) & JP 09 114430 A (HITACHI LTD), 2. Mai 1997 (1997-05-02) eine Vorrichtung bekannt, welche Elemente aufweist, mittels der der Abstand einer Bedienperson von einem Display erfasst wird. Der Abstand der Bedienperson vom Display dient zur Einstellung der Größe, in der das auf dem Display erscheinende Bild dargestellt ist.

Eine ähnliche Anordnung ist auch aus PATENT ABSTRACTS OF JAPAN vol. 1999, no. 09, 30. Juli 1999 (1999-07-30) & JP 11 109936 A (FUJI ELECTRIC CO LTD), 23. April 1999 (1999-04-23) bekannt.

Aus der WO 95/2601 A1 ist eine Anordnung bekannt, mittels welcher die Position beispielsweise eines menschlichen Fingers in einem dreidimensionalen Raum bestimmbar ist.

Darüber hinaus ist aus der WO 01/54276 A1 ein opto-elektronischer Schalter mit Auswertung von Bewegungsänderungen bekannt, bei der die Position eines Objekts, wie beispielsweise einer Fingerspitze im Raum bestimmbar ist. Durch eine Bewegung des Objekts und einer damit verbundenen Positionsänderung erfolgt eine Zustandsänderung des Schaltelements.

Es ist Aufgabe der Erfindung, eine eingangs genannte Vorrichtung derart auszubilden, daß sie zur einfachen Ausführung einer weiteren Funktion geeignet ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist eine Vorrichtung zur Bedienung eines Rechners oder eines rechnergestützten Gerätes, mit einer ersten Anordnung, mittels welcher die Position eines Objekts auf einer Achse bestimmbar ist, **dadurch gekennzeichnet, daß** Mittel vorhanden sind, mittels der der Abstand des Objekts von der Achse bestimmbar ist.

Dadurch, daß Mittel vorhanden sind, mittels der der Abstand des Objekts von der Achse bestimmbar ist, ist es möglich, eine vom Abstand abhängige Funktion durchzuführen. Während die erste Anordnung von Elementen zur Bestimmung der Position eines Objekts auf einer Achse oder beispielsweise der XY-Ebene verwendet wird, läßt sich mittels der Mittel die Position des Objekts in Z-Richtung bestimmen. Der durch die Mittel bestimmbare Abstand des Objekts von der Achse oder der XY-Ebene läßt sich zur Steuerung einer unabhängigen Funktion verwenden.

ist das Objekt beispielsweise die Fingerspitze eines Menschen, so kann beispielsweise die erste Anordnung von EJementen zur Steuerung eines Cursors eines Rechners verwendet werden und die Mittel zur Bestimmung des Abstands von der XY-Ebene zur Steuerung einer Zoom-Funktion an der betreffenden Position in der XY-Ebene, wie dies bei einer besonderen Ausführungsform der Erfindung vorgesehen ist. Somit läßt sich mittels der erfindungsgemäßen Vorrichtung auf einfache Weise der Cursor eines Rechners steuern und gleichzeitig durch Bewegung des Fingers in Z-Richtung eine Zoom-Funktion ausführen.

Wenngleich die Verwendung der erfindungsgemäßen Vorrichtung zur Steuerung eines Cursors eines Rechners mit integrierter Zoom-Funktion auch besonders vorteilhaft ist, läßt sich die erfindungsgemäße Vorrichtung beispielsweise aber auch im Bereich von TV- oder Audio-Anlagen verwenden. Des weiteren läßt sich die erfindungsgemäße Vorrichtung sehr gut im Bereich von Multimedia-Terminals und in der Medientechnik bei Präsentationsanlagen verwenden. Darüber hinaus läßt sich die erfindungsgemäße Vorrichtung bei Fembedienungen oder Spielen, insbesondere 3D-Spielen verwenden. Insbesondere bei Joysticks für Spielekonsolen. Weiterhin läßt sich die erfindungsgemäße Vorrichtung sehr gut bei Handys, Communicators, Palmtops und dergleichen verwenden.

Besonders vorteilhaft ist eine Ausführungsform der Erfindung, bei der die zweite Anordnung mit gleichen Elementen wie die erste Anordnung aufgebaut ist. Hierdurch kann die Bestimmung der Position des Gegenstands in Y-Richtung auf dieselbe Weise erfolgen, wie die Bestimmung der Position des Gegenstands in X-Richtung. Es kann somit im wesentlichen eine gleiche Auswerteelektronik verwendet werden.

Sehr vorteilhaft ist eine Ausführungsform der Erfindung, bei der der Abstand von der Ebene kontinuierlich bestimmbar ist. Hierdurch läßt sich die weitere Funktion in kontinuierlicher Weise ausführen. Dies ist insbesondere bei einer Zoom-Funktion von großem Vorteil.

Als sehr vorteilhaft hat sich eine Ausführungsform der Erfindung herausgestellt, bei der wenigstens zwei Strahlungssender vorhanden sind und ein Strahlungsempfänger vorhanden ist, welcher von einem jeweiligen Strahlungssender ausgesandte und von dem Objekt reflektierte Strahlen empfängt, wobei die Unterschiede der vom Strahlungsempfänger empfangenen reflektierten Strahlung ausgewertet werden. Die Auswertung kann beispielsweise durch Bildung des Verhältnisses der jeweiligen vom Strahlungsempfänger empfangenen Reflexionsstrahlung erfolgen. Das heißt, zur Bestimmung der Position des Objekts auf der Achse beziehungsweise auf der Ebene wird das Verhältnis der von dem Strahlungsempfänger empfangenen reflektierten Strahlung der Strahlungssender gebildet. Zur Bestimmung des Abstands des Objekts von der Achse beziehungsweise von der Ebene kann die Summe der von dem Strahlungsempfänger empfangenen reflektierten Strahlung einiger oder aller Strahlungssender gebildet werden.

Als sehr vorteilhaft hat sich jedoch eine Ausführungsform der Erfindung herausgestellt, bei der zur Bestimmung der Position des Objekts auf der Achse beziehungsweise auf der Ebene die Differenz der von dem Strahlungsempfänger empfangenen reflektierten Strahlung der Strahlungssender gebildet wird und zur Bestimmung des Abstands des Objekts von der Achse beziehungsweise von der Ebene die Summe der von dem Strahlungsempfänger empfangenen reflektierten Strahlung der Strahlungssender gebildet wird.

Dadurch, daß die Position des Objekts auf der Achse beziehungsweise gegebenenfalls auf der Ebene die Differenz der vom Strahlungsempfänger empfangenen Strahlung gebildet wird und zur Bestimmung des Abstands des Objekts von der Achse beziehungsweise gegebenenfalls von der Ebene die Summe der vom Strahlungsempfänger empfangenen Strahlung gebildet wird, läßt sich mit wenigen Bauelementen eine sehr zuverlässig arbeitende Schaltung aufbauen. Denn sowohl zur Differenzbildung als auch zur Summenbildung kann zum großen Teil auf dieselben Bauelemente zurückgegriffen werden.

Bei einer weiteren besonderen Ausführungsform der Erfindung ist vorgesehen, daß die Strahlungssender Strahlungsimpulse aussenden und die entsprechenden vom Strahlungsempfänger empfangenen Impulse mit einem jeweils zugehörigen internen Impuls kompensiert werden. Durch die Kompensation der impulse wird erreicht, daß die Schaltung sehr zuverlässig arbeitet. Des weiteren läßt sich mittels der Kompensationsimpulse auf einfache Weise die Differenz beziehungsweise die Summe der von dem Strahlungsempfänger empfangenen Strahlung bilden.

So lassen sich zur Kompensation steuerbare Verstärker verwenden, von deren Steuersignalen zur Bestimmung der Position des Objekts auf der Achse beziehungsweise gegebenenfalls auf der Ebene die Differenz gebildet wird und zur Bestimmung des Abstands des Objekts von der Achse beziehungsweise gegebenenfalls von der Ebene die Summe gebildet wird, wie dies bei einer weiteren besonderen Ausführungsform der Erfindung vorgesehen ist. Hierbei sind die Mittel als Rechenelement ausgebildet, mittels welchem die Differenz beziehungsweise die Summe gebildet wird.

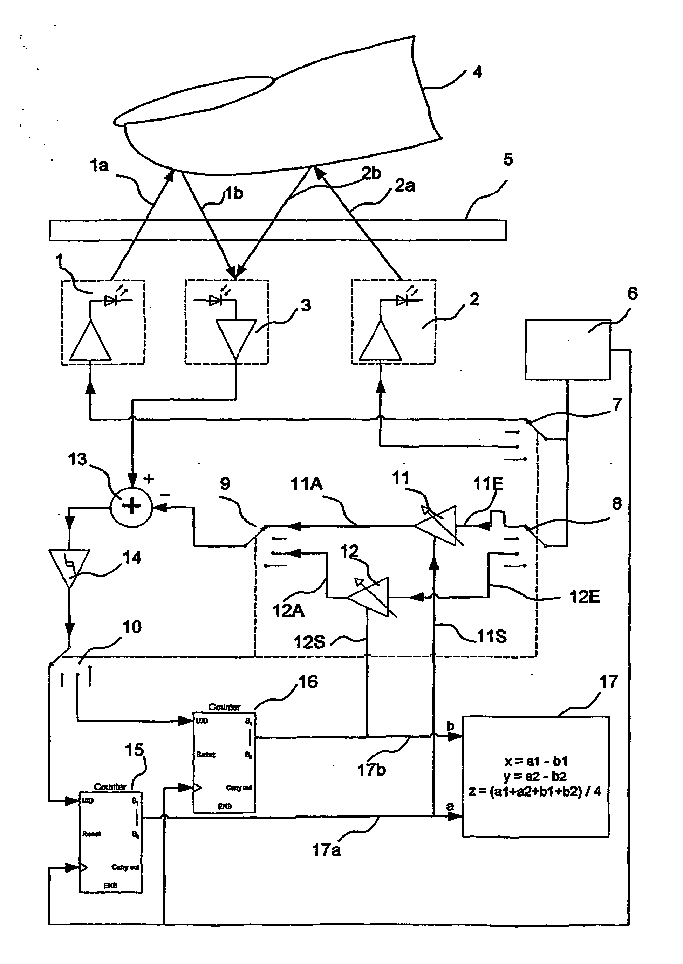

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Figur eine schematische Anordnung einer erfindungsgemäßen Vorrichtung.

Wie der Figur entnommen werden kann, wird von einem ersten Strahlungssender 1, welcher eine von einem Treiber angesteuerte LED aufweist, ein Infrarotstrahl 1a ausgesandt. Der Infrarotstrahl 1a durchdringt eine aus Glas bestehende Achse 5 und wird von einer Fingerspitze 4 eines Menschen reflektiert. Der reflektierte Strahl 1 b tritt ebenfalls durch die glasförmige Achse 5 hindurch und wird von einem Strahlungsempfänger 3, welcher eine Fotodiode und einen Verstärker aufweist, empfangen.

In gleicher Weise, wie der vom ersten Strahlungssender 1 ausgesandte Lichtstrahl 1a von der Fingerspitze 4 reflektiert wird und von dem Strahlungsempfänger 3 empfangen wird, wird auch ein von einem zweiten Strahlungssender 2, der denselben Aufbau hat, wie der erste Strahlungssender 1, ausgesandter Lichtstrahl 2a von der Fingerspitze 4 reflektiert und von dem Strahlungsempfänger 3 empfangen.

Der erste Strahlungssender 1 sowie der zweite Strahlungssender 2 werden von einem Pulsgenerator 6 zeitversetzt angesteuert. Entsprechend empfängt der Strahlungsempfänger 3 den reflektierten Lichtstrahl 1 b des Strahlungssenders 1 gegenüber dem reflektierten Lichtstrahl 2b des Strahlungssenders 2 zeitversetzt. Die vom Strahlungsempfänger 3 empfangenen reflektierten Lichtstrahlen 1 b, 2b der Strahlungssender 1, 2 werden auf einen Summierer 13 gegeben.

Auf den Summierer 13 werden des weiteren Signale umgekehrter Polarität gegeben, welche die vom Strahlungsempfänger 3 abgegebenen Signale kompensieren sollen. Die Kompensationssignale sind die Ausgangssignale von steuerbaren Verstärkern 11, 12, an deren Eingängen 11 E, 12E ebenfalls die vom Pulsgenerator 6 abgegebenen Impulse liegen. Der erste steuerbare Verstärker 11 wird zeitgleich mit dem ersten Strahlungssender 1 angesteuert. Der zweite steuerbare Verstärker 12 wird zeitgleich mit dem zweiten Strahlungssender 2 angesteuert.

Das vom Summierer 13 ausgegebene Signal liegt am Eingang eines Komparators 14. Das Ausgangssignal des Komparators 14 wird während der Zeit, während der der erste Strahlungssender 1 angesteuert wird, auf den Zählrichtungseingang eines ersten Zählers 15 gegeben, an dessen Zähleingang das Ausgangssignal des Pulsgenerators 6 anliegt. Das Ausgangssignal des Komparators 14 wird während der Zeit, während der der zweite Strahlungssender 2 angesteuert wird, auf den Zählrichtungseingang eines zweiten Zählers 16 gegeben, an dessen Zähleingang das Ausgangssignal des Pulsgenerators 6 anliegt. Das Ausgangssignal des ersten Zählers 15 wird auf den Steuereingang 11s des ersten steuerbaren Verstärkers 11 gegeben. Das Ausgangssignal des zweiten Zählers 16 wird auf den Steuereingang 12s des zweiten steuerbaren Verstärkers 12 gegeben. Des weiteren werden das Ausgangssignal des ersten Zählers 15, auf den ersten Eingang 17a eines Rechenelements 17 gegeben sowie das Ausgangssignal des zweiten Zählers 16 auf den zweiten Eingang 17b des Rechenelements 17 gegeben.

Die zeitliche Zuordnung der Signale erfolgt mittels Schalter 7, 8, 9, 10, welche synchron schalten.

Ergibt der Vergleich im Summierer 13, daß das vom Strahlungsempfänger 3 empfangene Signal des Strahlungssenders 1 größer ist als das zeitgleich an den Summierer 13 angelegte Ausgangssignal des ersten steuerbaren Verstärkers 11, bewirkt das Ausgangssignal des Komparators 14, daß der erste Zähler 15 aufwärts zählt. Hierdurch vergrößert sich das Ausgangssignal des ersten Zählers 15, was zur Folge hat, daß die Verstärkung des ersten steuerbaren Verstärkers 11 zunimmt. Dieser Vorgang wiederholt sich solange, bis das vom ersten steuerbaren Verstärker 11 abgegebene Signal größter ist als das zugehörige Ausgangssignal des Strahlungsempfängers 3.

In dem Fall, in dem das Ausgangssignal des Strahlungsempfängers 3 kleiner als das zugehörige Ausgangssignal des ersten steuerbaren Verstärkers 11 ist, bewirkt das Ausgangssignal des Komparators 14, daß der erste Zähler 15 abwärts zählt. Hierdurch verringert sich das am Steuereingang 11S des ersten steuerbaren Verstärkers 11 anliegende Signal, wodurch sich die Verstärkung des ersten Verstärkers 11 verringert, was zur Folge hat, daß das Ausgangssignal des ersten steuerbaren Verstärkers 11 kleiner wird. Das Ausgangssignal des ersten Zählers 15 schwankt somit um einen bestimmten Wert.

In der zuvor beschriebenen Weise arbeitet auch der zweite Zähler 16, der das vom zweiten Strahlungssender 2 abgegebene Signal verarbeitet, in Verbindung mit dem zweiten steuerbaren Verstärker 12.

Da die Intensität der von der Fingerspitze 4 reflektierten Signale der Strahlungssender 1, 2 von der Position der Fingerspitze 4 abhängen, lassen sich diese Signale zur Bestimmung der Position der Fingerspitze 4 relativ zu den Strahlungssendem 1, 2 bestimmen. Die Bestimmung der Position geschieht dadurch, daß in dem Rechenelement 17 die Differenz zwischen den Ausgangssignalen des ersten Zählers 15 und den Ausgangssignalen des zweiten Zählers 16 gebildet wird. Der Differenzwert ist ein Maß für die Position der Fingerspitze 4 auf der Achse 5.

Da die Stärke der von der Fingerspitze 4 reflektierten Strahlung auch vom Abstand der Fngerspitze 4 vom Strahlungsempfänger 3 beziehungsweise der Achse 5 abhängt, läßt sich die vom Strahlungsempfänger 3 empfangene Strahlung zur Bestimmung des Abstands der Fingerspitze vom Strahlungsempfänger 3 beziehungsweise der Achse 5 verwenden. Hierzu werden im Rechenelement 17 die Ausgangssignale der Zähler 15 und 16 addiert. Das Summationssignal stellt ein Maß für den Abstand der Fingersptize 4 von der Achse 5 dar.

Stellt die in der Figur dargestellte Achse 5 die X-Achse einer XY-Ebene dar und wird derselbe Aufbau zur Darstellung der Y-Achse verwendet, läßt sich die Position der Fingerspitze 4 auf der durch die X-Achse und die Y-Achse aufgespannten Fläche bestimmen. Zur Bestimmung des Abstands der Fingerspitze 4 von dieser Fläche wird dann jedoch die Summe aus den von allen vier Strahlungssendem abgegebenen und reflektierten Impulsen gebildet.

## Patentansprüche

1. Vorrichtung zur Bedienung eines Rechners oder eines rechnergestützten Gerätes, mit einer ersten Anordnung (1, 2, 3), mittels welcher die Position eines Objekts (4) auf einer Achse (5) bestimmbar ist, wobei Mittel (17) vorhanden sind, mittels der der Abstand des Objekts (4) von der Achse (5) zur Steuerung einer Zoom-Funktion bestimmbar ist
**dadurch gekennzeichnet,**
**dass** wenigstens zwei Strahlungssender (1, 2) vorhanden sind und ein Strahlungsempfänger (3) vorhanden ist, welcher von einem jeweiligen Strahlungssender (1, 2) ausgesandte (1a, 2a) und von dem Objekt (4) reflektierte Strahlung (1b, 2b) empfängt, wobei zur Bestimmung der Position des Objekts (4) auf der Achse (5) beziehungsweise gegebenenfalls auf der Ebene die Unterschiede der vom Strahlungsempfänger (3) empfangenen reflektierten Strahlung (1b, 2b) ausgewertet werden, wobei zue Bestimmung der Position des Objekts (4) auf der Achse (5) beziehungsweise gegebenenfalls auf der Ebene die Differenz der von dem Strahlungsempfänger (3) empfangenen reflektierten Strahlung (1b, 2b) der Strahlungssender (1, 2) gebildet wird und zur Bestimmung des Abstands des Objekts (4) von der Achse (5) beziehungsweise gegebenenfalls von der Ebene die Summe der von dem Strahlungempfänger empfangenen reflektierten Strahlung (1b, 2b) der Strahlungssender (1, 2) gebildet wird.

2. Vorrichtung nach Anspruch 1,
**dadurch gekennzeichnet,**
**dass** eine zweite Anordnung vorhanden ist, mittels der die Position des Objekts (4) auf einer Ebene bestimmbar ist, wobei mittels der Mittel (17) der Abstand des Objekts (4) von der Ebene zur Steuerung einer Zoom-Funktion bestimmbar ist.

3. Vorrichtung nach Anspruch 1 oder 2,
**dadurch gekennzeichnet,**
**dass** die zweite Anordnung im wesentlichen wie die erste Anordnung (1, 2, 3) aufgebaut ist.

4. Vorrichtung nach einem Ansprüche 1 bis 3,
**dadurch gekennzeichnet,**
**dass** der Abstand des Objekts (4) von der Achse (5) beziehungsweise gegebenenfalls von der Ebene kontinuerlich bestimmbar ist.

5. Vorrichtung nach Anspruch 1 bis 4,
**dadurch gekennzeichnet,**
**dass** die Strahlungssender (1, 2) Strahlungsimpulse aussenden und die entsprechenden vom Strhlungsempfänger (3) empfangenen Impulse mit einem jeweils zugehörigen internen Impuls kompensiert werden.

6. Vorrichtung nach Anspruch 5,
**dadurch gekennzeichnet,**
**dass** zur Kompensation steuerbare Verstärker (11, 12) verwendet werden und die Mittel (17) als Rechenelement (17) ausgebildet sind, welches von den Steuersignalen (11s, 12s) der Verstärker (11, 12) zur Bestimmung der Position des Objekts (4) auf der Achse (5) beziehungsweise gegebenenfalls auf der Ebene die Differenz bildet und zur Bestimmung des Abstands des Objekts (4) von der Achse (5) beziehungsweise gegebenenfalls von der Ebene die Summe bildet.

## Claims

1. A device for operating a computer or a computer-assisted device, comprising a first arrangement (1, 2, 3) which can be used to determine the position of an object (4) on an axis s (5), wherein means (17) are provided in order to determine the distance of the object (4) from the axis (5) in order to control a zoom function, **characterised in that** at least two radiation transmitters (1, 2) are provided, and a radiation receiver (3) is provided which receives radiation (1b, 2b) transmitted (1a, 2a) by the respective radiation transmitters (1, 2) and reflected by the object (4), wherein, in order to determine the position of the object (4) on the axis (5) or, optionally, on the plane, the differences between the reflected radiation (1b, 2b) received by the radiation receiver (3) are evaluated, wherein, in order to determine the position of the object (4) on the axis (5) or, optionally, on the plane, the difference between the reflected radiation (1b, 2b) from the radiation transmitters (1, 2) received by the radiation receiver (3) is formed, and in order to determine the distance of the object (4) from the axis (5) or, optionally, from the plane, the total of the reflected radiation (1b, 2b) from the radiation transmitters (1, 2) received by the radiation receiver is formed.

2. Device according to claim 1, **characterised in that** a second arrangement is provided by means of which the position of the object (4) on a plane can be determined, wherein the distance of the object (4) from the plane can be determined, using the means (17), in order to control a zoom function.

3. Device according to claim 1 or 2, **characterised in that** the second arrangement is substantially structured like the first arrangement (1, 2, 3).

4. Device according to one of the claims 1 to 3, **characterised in that** the distance of the object (4) from the axis (5) or, optionally, from the plane, can be determined continuously.

5. Device according to claim 1 to 4, **characterised in that** the radiation transmitters (1, 2) transmit radiation pulses and the corresponding pulses received by the radiation receiver (3) are compensated with an associated internal pulse.

6. Device according to claim 5, **characterised in that** controllable amplifiers (11, 12) are used for compensation and the means (17) are in the form of a computing element (17) which forms the difference between the control signals (11s, 12s) of the amplifier (11, 12) in order to determine the position of the object (4) on the axis (5) or, optionally, on the plane, and forms the total in order to determine of the distance of the object (4) from the axis (5) or, optionally, from the plane.

## Revendications

1. Dispositif d'utilisation d'un ordinateur ou d'un appareil assisté par ordinateur, avec un premier arrangement (1, 2, 3) au moyen duquel la position d'un objet (4) sur un axe (5) peut être déterminée, des moyens (17) étant prévus, au moyen desquels la distance de l'objet (4) à l'axe (5) peut être déterminée pour commander une fonction de zoom,
**caractérisé en ce**
**qu'**il est prévu au moins deux émetteurs de rayonnement (1, 2) et un récepteur de rayonnement (3), lequel reçoit le rayonnement émis (1a, 2a) par un émetteur de rayonnement respectif (1, 2) et le rayonnement réfléchi (1b, 2b) par l'objet (4), sachant que pour déterminer la position de l'objet (4) sur l'axe (5), respectivement le cas échéant dans le plan, on évalue les différences du rayonnement réfléchi (1b, 2b) reçu par le récepteur de rayonnement (3), que pour déterminer la position de l'objet (4) sur l'axe (5), respectivement le cas échéant dans le plan, on forme la différence du rayonnement réfléchi (1b, 2b) des émetteurs de rayonnement (1, 2) reçu par le récepteur de rayonnement (3) et que pour déterminer la distance de l'objet (4) à l'axe (5), respectivement le cas échéant au plan, on forme la somme du rayonnement réfléchi (1b, 2b) des émetteurs de rayonnement (1, 2) reçu par le récepteur de rayonnement.

2. Dispositif selon la revendication 1,
**caractérisé en ce**
**qu'**il est prévu un deuxième arrangement au moyen duquel la position de l'objet (4) dans un plan peut être déterminée, la distance de l'objet (4) au plan pouvant être déterminée au moyen des moyens (17) pour commander une fonction de zoom.

3. Dispositif selon la revendication 1 ou 2,
**caractérisé en ce**
**que** le deuxième arrangement est essentiellement structuré comme le premier arrangement (1, 2, 3).

4. Dispositif selon une des revendications 1 à 3,
**caractérisé en ce**
**que** la distance de l'objet (4) à l'axe (5), respectivement le cas échéant au plan, peut être déterminée en continu.

5. Dispositif selon les revendications 1 à 4,
**caractérisé en ce**
**que** les émetteurs de rayonnement (1, 2) émettent des impulsions de rayonnement et les impulsions correspondantes reçues par le récepteur de rayonnement (3) sont compensées par une impulsion interne respectivement associée.

6. Dispositif selon la revendication 5,
**caractérisé en ce**
**que** des amplificateurs commandables (11, 12) sont utilisés pour la compensation et les moyens (17) sont réalisés sous la forme d'un élément de calcul (17) qui forme la différence des signaux de commande (11s, 12s) des amplificateurs (11, 12) pour déterminer la position de l'objet (4) sur l'axe (5), respectivement le cas échéant dans le plan, et forme leur somme pour déterminer la distance de l'objet (4) à l'axe (5), respectivement le cas échéant au plan.
